# EUROPÄISCHE PATENTSCHRIFT

(11) **EP 2 468 395 B1**
(45) Veröffentlichungstag und Bekanntmachung des Hinweises auf die Patenterteilung: **03.05.2017**
(21) Anmeldenummer: 11192586.3
(22) Anmeldetag: 08.12.2011
(51) Int. Cl.: B01J 19/32, B01D 3/14

(54) **Stoffaustauschverfahren und strukturierte Packung für eine kleine Flüssigkeitsbelastung**
Mass transfer method and structured packing for a reduced fluid load
Procédé d'échange de matière et garnissage structuré pour une faible charge de liquide

(30) Priorität: 22.12.2010 EP 10196386
(43) Veröffentlichungstag der Anmeldung: 27.06.2012
(73) Patentinhaber: Sulzer Chemtech AG, 8404 Winterthur (CH)
(72) Erfinder: Wicki, Werner, 8408 Winterthur (CH); Duss, Markus, 8405 Winterthur (CH); Ausner, Ilja, 78337 Oehningen (DE)
(74) Vertreter: Manitz Finsterwald Patentanwälte PartmbB

(56) Entgegenhaltungen:
- EP-A1- 0 010 899
- EP-A1- 1 308 204
- EP-A1- 1 477 224
- EP-A2- 0 416 649
- DE-A1- 1 769 739
- DE-A1- 2 434 082
- DE-A1- 3 703 126
- US-A- 5 407 607

## Beschreibung

Die Erfindung betrifft ein Stoffaustauschverfahren und eine strukturierte Packung, welche in dem Stoffaustauschverfahren zum Einsatz für eine kleine Flüssigkeitsbelastung kommt. Insbesondere kann der Stoffaustauschapparat als Absorptionsapparat oder Destillationskolonne ausgebildet sein.

Strukturierte Packungen werden als Einbauten in Stoffaustauschapparaten, wie beispielsweise Destillationskolonnen oder Absorptionskolonnen eingesetzt. Sie dienen der Verbesserung des Stoffaustauschs zwischen Gasen und Flüssigkeiten insbesondere in Anwendungen, in denen die Flüssigkeitsbelastung niedrig ist und/oder die Oberflächenspannung der Flüssigkeit hoch ist. Eine strukturierte Packung ist üblicherweise aus dünnwandigen Elementen in einer regelmässigen, vorgegebenen Anordnung aufgebaut, auf welchen sich die Flüssigkeit als Tropfen oder Film befindet. Diese dünnwandigen Elemente sind derart in dem Stoffaustauschapparat angeordnet, dass sie von einem Gas durchströmt werden können. Das Gas kommt mit der Flüssigkeit, die sich auf der Oberfläche des dünnwandigen Elements befindet, in Kontakt, wenn es den Stoffaustauschapparat durchströmt. Bei diesem Kontakt kann eine im Gas angereicherte Komponente in die Flüssigkeit übergehen oder umgekehrt, das heisst ein Stoffaustausch stattfinden.

Die Stoffaustauschmenge pro Zeiteinheit ist proportional der Grenzfläche von Gas und Flüssigkeit. Die Grenzfläche ist umso grösser, je grösser der Anteil der Oberfläche der Packung ist, welche von der Flüssigkeit benetzt wird.

Für das Stoffaustauschverfahren, also beispielsweise das Destillationsverfahren oder Absorptionsverfahren, werden strukturierte Packungen verwendet, um eine möglichst grosse Stoffaustauschfläche zwischen zwei Fluiden zu erzeugen. Dazu strömt das eine Fluid als Flüssigkeit direkt auf der Packungsoberfläche und das andere Fluid strömt als Gasphase in den von den dünnwandigen Elementen gebildeten Packungskanälen im Gegenstrom. Beide Fluide stehen in direktem Kontakt zueinander und tauschen an ihrer Phasengrenzfläche Energie und/oder Stoffe miteinander aus. Für einen optimalen Stoffaustausch und/oder Energieaustausch ist es daher notwendig, dass die Flüssigkeit sich auf der gesamten zur Verfügung gestellten Packungsoberfläche befindet, um eine grösstmögliche Phasengrenzfläche auszubilden.

Gerade diese Notwendigkeit ist aber beispielsweise bei niedrigen Flüssigkeitsbelastungen nicht immer erfüllt. Eine niedrige Flüssigkeitsbelastung bedeutet, dass gerade soviel Flüssigkeit durch den Stoffaustauschapparat geleitet wird, dass die Flüssigkeit die Packungsoberfläche der strukturierten Packung bestenfalls als Film benetzt, das heisst die gesamte Packungsoberfläche der Packung eine Phasengrenzfläche ausbildet. Unter der Flüssigkeitsbelastung L versteht man den Flüssigkeitsvolumenstrom pro Kolonnenquerschnittsfläche. Speziell in Anwendungen mit sehr kleinen Flüssigkeitsbelastungen in Kombination mit schlecht benetzenden Flüssigkeiten mit hohen Oberflächenspannungen, das heisst beispielsweise für wässrige Systeme, kommt es vor, dass nur ein Bruchteil der Packungsoberfläche mit Flüssigkeit benetzt wird und die Phasengrenzfläche für den Energie- und Stofftransport dadurch drastisch reduziert wird.

Eine gute Benetzbarkeit liefern strukturierte Packungen mit einer Kreuzkanalstruktur aus plissierten Gewebelagen. Eine derartige Kreuzkanalstruktur ist beispielsweise in der DE 1442714 beschrieben.

Als besonders vorteilhaft haben sich gemäss GB 451014 Gewebe mit Fasermaterialien herausgestellt, die aufgrund des sehr kleinen Abstandes der Fasern zueinander eine hohe Kapillarität aufweisen und dadurch eine sehr gute Benetzbarkeit aufweisen. Derartige Fasermaterialien können beispielsweise gemäss EP 531255 A1 aus Glas oder Basalt bestehen. Um die mechanische Stabilität einer strukturieren Packung aus einem Fasermaterial zu gewährleisten, wurden die Fasern zusammen mit anderen Materialien wie Drähten aus Stahl oder Kunststoff verwoben, was in der DE 1442714 oder der DE 2434082 gezeigt ist oder auch auf entsprechende Gerüstkonstruktionen aufgespannt, wie in der DE 1769739 ausgeführt ist.

Auch für die Anwendung in wässrigen Systemen werden mit Vorteil Gewebepackungen eingesetzt. So werden in EP 2119713 A1 beispielsweise mehrere Packungen aus reinem Metallgewebe für die Destillation eines wässrigen Systems genannt. Auch in US 7411098 werden Metallgewebepackungen für die wässrige Destillation vorgeschlagen.

Aus der EP-A- 1477224 ist eine Kreuzkanalpackung bekannt, die aus einem Metallgewebe aufgebaut ist, welche mit einer niedrigen spezifischen Flüssigkeitsbelastung betrieben wird. Die spezifische Flächenbelastung wird durch das Verhältnis der Flüssigkeitsbelastung L zu der spezifischen Oberfläche a der Packung bestimmt. Das Verhältnis von L/a liegt gemäss EP-A- 1477224 unter einem Maximalwert von 10 l/mh. Die spezifische Oberfläche a ist definiert als das Verhältnis der Oberfläche der Packung zu dem Volumen, welches durch die Packung eingenommen wird. Das Verhältnis von L/a wird auch als Kantenbelastung bezeichnet. Eine grosse Kantenbelastung führt in der Regel zu guter Benetzung der Oberfläche der Packung, da eine bestimmte Flüssigkeitsmenge auf einen kleinen Bereich der Oberfläche der Packung trifft. Eine kleine Kantenbelastung dagegen kommt bei gleicher Flüssigkeitsbelastung und viel grösserem Bereich der Oberfläche der Packung zustande und führt im Normalfall zu deutlich schlechterer Benetzung der zur Verfügung gestellten Oberfläche der Packung.

Allerdings hat sich gezeigt, dass eine derartige Packung aus einem Metallgewebe einen Film in der Form eines schmalen Bandes auf der Packungsoberfläche erzeugt, das heisst nur einen sehr kleinen Anteil der Packungsoberfläche benetzt, wenn die Flüssigkeitsbelastung klein ist und/oder die Flüssigkeit eine grosse Oberflächenspannung aufweist, d.h. vorzugsweise eine Oberflächenspannung grösser 30 mN/m, insbesondere grösser 50 mN/m.

Die EP 0 416 649 A beschreibt eine Gewebelage für eine strukturierte Packung, gemäss welcher kapillaraktive Bänder in der Kette ein gutes Benetzungsvermögen aufweisen, das heisst, dass die Flüssigkeit in horizontaler Richtung besser verteilt werden kann. Dies wird mit Hilfe von Kettfäden aus nichtmetallischem Werkstoff erreicht. Die Packung oder Kolonnenfüllungselemente gewinnen gemäss EP 0 416 649 A eine Selbsttrennfähigkeit und macht gesonderte Flüssigkeitsverteiler überflüssig. Die Gewebelage gemäss EP 0 416 649 A hat kommerziell gemäss der von der Anmelderin durchgeführten Recherchen nie Anwendung gefunden. Zudem ist ein Flüssigkeitsverteiler grundsätzlich erforderlich um die flüssige Phase gleichmässig auf die Packung zu verteilen, sodass der in der EP 0 416 649 A genannte Vorteil, dass gesonderte Flüssigkeitsverteiler überflüssig sind, sich tatsächlich in der Praxis nicht bewährt haben dürfte. Ein Vergleich der Erfindung mit der Gewebelage der EP 0 416 649 A ist daher aus den genannten Gründen nicht möglich.

Ein Packungselement für einen katalytischen Reaktor wird auch Dokument EP1 308 204 A1 gezeigt, welches eine Kreuzkanalpackung zeigt. Zwischen benachbarten Lagen der Kreuzkanalpackung befindet sich eine Gewebelage. Die Gewebelage dient der Durchführung der Katalyse und ist als eine Zwischenschicht ausgebildet. Die Zwischenschicht kann ein Wellenprofil aufweisen und zusammen mit einer benachbarten Lage, die als Stützpackung dient, eine Kreuzkanalpackung ausbilden. Kettfäden und Schussfäden dieser Zwischenschicht können Faserstränge enthalten. Die gemäss der EP1 308 204 A1 zu lösende Aufgabe bestand darin, eine Lage bereitzustellen, mittels welcher die Katalyse durchgeführt werden kann, somit ist es nicht von Belang, die Benetzbarkeit der Oberfläche der Packung zu erhöhen. Hierzu müssten gleichartige Gewebelagen aneinander angrenzend vorgesehen sein, und sich an Kontaktpunkten berühren, damit sie sich gegenseitig beeinflussen können. Diese Beeinflussung ist für das Packungselement der EP1 308 204 A1 nicht möglich, da gar keine benachbarten Gewebelagen vorhanden sind. Die Gewebelagen sind zwischen formstabilen Membranen angeordnet, also nicht zueinander benachbart zueinander angeordnet.

Daher ist es Aufgabe der Erfindung, ein Stoffaustauschverfahren sowie eine strukturierte Packung zur Durchführung des Stoffaustauschverfahrens sowie einen Stoffaustauschapparat enthaltend diese strukturierte Packung bereitzustellen, wobei mittels der strukturierten Packung der Anteil der benetzten Packungsoberfläche vergrössert werden kann.

Die Aufgabe wird mittels eines Stoffaustauschverfahrens gelöst, welches die nachfolgenden Schritte umfasst: Zuführen eines ersten Fluids und eines zweiten Fluids in einen Stoffaustauschapparat, wobei der Stoffaustauschapparat einen Behälter umfasst, welcher einen Kopfbereich, einen Bodenbereich und einen Stoffaustauschbereich aufweist, wobei das erste Fluid mit dem zweiten Fluid zumindest im Stoffaustauschbereich in Kontakt gebracht wird, wobei der Stoffaustauschbereich zwischen dem Kopfbereich und dem Bodenbereich angeordnet ist und der Stoffaustauschbereich eine strukturierte Packung enthält, welche eine Mehrzahl von zueinander benachbarten Lagen aus einem Gewebe enthält, welches Faserstränge aus einem nichtmetallischen Werkstoff enthält, die als Schussfäden ausgebildet sind, wobei zwischen den Fasersträngen aus nichtmetallischem Werkstoff Metalldrähte angeordnet sind, wobei die Schussfäden eine Garnstärke von mindestens 100 g / 1000 m aufweisen und die Schussfäden zumindest 20 Fäden / 25.4 mm umfassen. Der Stoffaustauschapparat wird mit einer Flüssigkeitsbelastung von maximal 3 m³/m²h betrieben, bevorzugt mit einer Flüssigkeitsbelastung von maximal 0.5 m³/m²h. Die benachbarten Lagen sind nebeneinander angeordnet. Insbesondere weist eines der ersten oder zweiten Fluide eine Oberflächenspannung von zumindest 30 mN/m, vorzugsweise zumindest 50 m N/m auf.

Gemäss des Verfahrens nach einem der vorhergehenden Ausführungsbeispiele enthält das Fluid Wasser, Amine, Amide, insbesondere Dimethylformamid, ein- oder mehrwertige Alkohole, insbesondere Alkohole von Fettsäuren, Mono-, Di-, Tri- , Tetraethylenglykol, Monomere von Kunststoffen, insbesondere MDI (Diphenylmethandiisocyanat), DMT (Dimethylterephthalat), Carbonsäuren, insbesondere Fettsäuren, Ester, insbesondere Fettsäureester, oder Mischungen von zumindest zwei der vorgenannten Komponenten.

Eine strukturierte Packung für einen Stoffaustauschapparat gemäss der Erfindung hat einen Kopfbereich und einen Bodenbereich. Die strukturierte Packung enthält eine Mehrzahl von zueinander benachbarten Lagen, welche je eine Oberseite ausbilden, die dem Kopfbereich zugewendet ist und je eine Unterseite ausbilden. Die Unterseite ist dem Bodenbereich zugewendet. Die Lage weist ein Wandelement auf, das sich zwischen der Oberseite und der Unterseite erstreckt. Das Wandelement ist als ein Gewebe ausgebildet, welches Faserstränge aus einem nichtmetallischen Werkstoff enthält, die als Schussfäden ausgebildet sind, wobei die Schussfäden eine Garnstärke von mindestens 100 g/1000 m aufweisen und die Schussfäden zumindest 20 Fäden/25.4 mm umfassen.

Nach einem bevorzugten Ausführungsbeispiel können mindestens zwei Faserstränge aus dem nichtmetallischen Werkstoff unmittelbar nebeneinander angeordnet sein. Insbesondere beträgt die spezifische Oberfläche der Packung von 0 m²/m³ bis maximal 500 m²/m³.

Zwischen den Fasersträngen aus nichtmetallischem Werkstoff sind Metalldrähte angeordnet. Die Schussfäden können durch Kettfäden verwoben sein, wobei zumindest ein Teil der Kettfäden als Metalldrähte ausgebildet sind. Die Faserstränge aus nichtmetallischem Werkstoff können Glas, Basalt oder ein Polymer enthalten. Die Metalldrähte enthalten bevorzugt rostfreien Stahl, Titan, Hastelloy, Duplex, Tantal oder können eine Beschichtung aufweisen. Die Beschichtung kann insbesondere der Erhöhung der Korrosionsbeständigkeit dienen.

Die strukturierte Packung nach einem bevorzugten Ausführungsbeispiel hat eine Lage mit einer Wand, die ein wellenartiges Profil aufweist, durch welches eine Mehrzahl offener Kanäle ausgebildet ist, welche sich von der Oberseite der Packung zur Unterseite der Packung erstrecken, wobei die Kanäle ein erstes Wellental, einen ersten Wellenberg und einen zweiten Wellenberg umfassen. Der erste Wellenberg und der zweite Wellenberg begrenzen das erste Wellental. Der erste und der zweite Wellenberg weisen einen ersten Scheitel und einen zweiten Scheitel auf.

Insbesondere enthält der Stoffaustauschapparat eine strukturierte Packung nach einem der vorhergehenden Ausführungsbeispiele. Der Stoffaustauschapparat kann insbesondere als Absorptionsapparat oder als Destillationskolonne ausgebildet sein.

Der Stoffaustauschapparat kann einen Kopfbereich, einen Bodenbereich und einen zwischen Kopfbereich und Bodenbereich angeordneten Stoffaustauschbereich aufweisen, wobei ein Fluidverteiler in dem Stoffaustauschapparat derart angeordnet ist, dass mit dem Fluidverteiler das erste Fluid auf die Oberseite der strukturierten Packung verteilbar ist, das erste Fluid als Film auf den Wandflächen der Lagen der strukturierten Packung aufbringbar ist und dabei in Kontakt mit einem im Gegenstrom zu dem ersten Fluid strömenden zweiten Fluid bringbar ist. Das Fluid enthält insbesondere Wasser, Amine, Amide, insbesondere Dimethylformamid, ein-oder mehrwertige Alkohole, insbesondere Alkohole von Fettsäuren, Mono-, Di-, Tri-, Tetraethylenglykol, Monomere von Kunststoffen, insbesondere MDI (Diphenylmethandiisocyanat), DMT (Dimethylterephthalat), Carbonsäuren, insbesondere Fettsäuren, Ester, insbesondere Fettsäureester. Insbesondere kann das Fluid auch Mischungen von zumindest zwei der vorgenannten Komponenten enthalten. Hierbei umfasst der Begriff mehrwertig insbesondere auch zweiwertig, also auch ein Diol.

Eine strukturierte Packung nach einem der nachstehenden Ausführungsbeispiele führt zu einer verbesserten Ausnützung der Packungsoberfläche im Vergleich zu den bisher verwendeten Metallgeweben.

Da reine Metallgewebe nur eine niedrige Kapillarität aufweisen, enthält die Lage ein Gewebe, welches Faserstränge aus einem nichtmetallischen Werkstoff enthält, die als Schussfäden ausgebildet sind.

Zusätzlich sind reine Metallgewebe gegenüber einer Gewebepackung mit zumindest einem Anteil an Fasersträngen deutlich kostenintensiver in der Anschaffung.

Die Erfindung beinhaltet ein Stoffaustauschverfahren mit einer erfindungsgemässen strukturierten Packung, hergestellt aus einem Gewebe bestehend aus Metalldrähten und Fasersträngen, die insbesondere bei Destillations- und Absorptionsanwendungen mit extrem kleinen Flüssigkeitsbelastungen von maximal 3 m³/m²h, vorzugsweise maximal 0.5 m³/m²h und wässrigen Systemen zu einer Vergrösserung der Phasengrenzfläche führt und somit im Vergleich zu herkömmlichen strukturierten Packungen einen höheren Energie- und/oder verbesserten Stoffaustausch ermöglicht. Die Hybridgewebepackung ist insbesondere für Anwendungen vorteilhaft, bei denen die Kantenbelastung kleiner als 10 l/mh, insbesondere kleiner als 2 l/mh ist. Der untere Grenzwert für die Kantenbelastung liegt vorteilhafterweise bei mindestens 0.2 l/mh.

Nachfolgend wird die Erfindung anhand der Zeichnungen erläutert. Es zeigen:
- Fig. 1: einen Stoffaustauschapparat, welcher eine strukturierte Packung gemäss der Erfindung enthält
- Fig. 2: ein Ausführungsbeispiel einer strukturierten Packung gemäss der Erfindung
- Fig. 3: eine Darstellung der Benetzung einer herkömmlichen strukturierten Packung
- Fig. 4: eine Darstellung der Benetzung einer strukturierten Packung gemäss der vorliegenden Erfindung
- Fig. 5: eine Darstellung der Verteilung der Flüssigkeit der erfindungsgemässen Packung im Vergleich mit einer Packung aus dem Stand der Technik
- Fig. 6: einen Vergleich der Trennleistung der Packung gemäss der Erfindung zum Stand der Technik
- Fig. 7: einen Vergleich einer Blechpackung, einer Metallgewebepackung und einer Hybridgewebepackung für die Absorption von DMF
- Fig. 8: eine Variante der erfindungsgemässen Packung

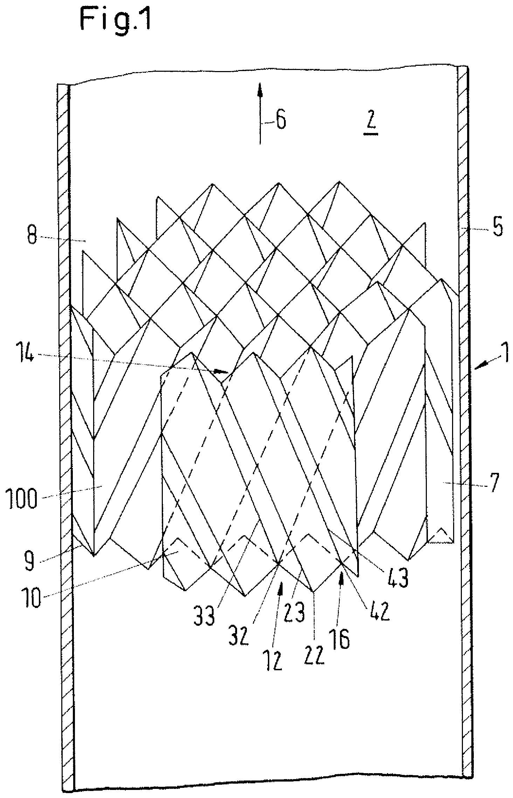

Fig. 1 zeigt einen Stoffaustauschapparat, welcher eine strukturierte Packung 7 enthält. Die strukturierte Packung 7 umfasst einige Lagen 10, 100, welche einen Packungskörper ausbilden. Als strukturierte Packung 7 wird ein Mittel zum Stoffaustausch zwischen zwei fluiden Phasen verstanden. Die strukturierte Packung 7 wird in einem Stoffaustauschapparat 2 verwendet. Der Stoffaustauschapparat kann insbesondere als eine Kolonne 5 ausgeführt sein, welche für eine Destillation, Rektifikation, Absorption oder Desorption eingesetzt werden kann.

Der Stoffaustauschapparat hat einen Kopfbereich und einen Bodenbereich. Die strukturierte Packung 7 enthält zumindest eine Lage 10, 100, welche eine Oberseite ausbildet, die dem Kopfbereich zugewendet ist und eine Unterseite ausbildet, welche dem Bodenbereich zugewendet ist. Die Lage weist ein Wandelement auf, das sich zwischen der Oberseite und der Unterseite erstreckt.

In der Regel besteht die strukturierte Packung 7 aus einer Mehrzahl von Lagen 10, 100, die zueinander in einer sich regelmässig wiederholenden geometrischen Beziehung stehen. Als Beispiel für diese geometrische Beziehung kann der Abstand benachbarter Lagen gewählt werden. Aufgrund der geometrischen Beziehung können die Abstände benachbarter Lagen voneinander periodisch denselben Wert annehmen, sodass aus der Summe der Lagen eine Struktur entsteht, die durch gleiche oder zumindest periodisch gleiche Abstände gekennzeichnet ist. Die Periodizität findet sich in der gesamten strukturierten Packung, wodurch die Packung eine regelmässige Struktur erhält. Insbesondere kann die Struktur als wellenartiges Profil ausgebildet sein.

Die Lagen 10, 100 gemäss Fig. 1 bestehen aus dünnwandigen Elementen, die ein wellenartiges Profil aufweisen. Das wellenartige Profil ist gekennzeichnet durch eine sich periodisch wiederholende Folge von Erhebungen, also Wellenbergen und talartigen Senken, also Wellentälern. Dieses wellenartige Profil kann insbesondere als Faltung mit einem Zick-Zackprofil mit spitz zulaufenden Kanten oder mit Wellenbergen und/oder Wellentälern mit einem Radius ausgebildet sein. Die Lagen werden so zueinander angeordnet, dass die wellenartigen Profile von zwei benachbarten Lagen in einem Winkel zu der Hauptströmungsrichtung geneigt sind. Die wellenartigen Profile benachbarter Lagen 10, 100 sind daher zueinander kreuzweise angeordnet.

Die erste Lage 10 und die zweite Lage 100 bestehen aus je einem Wandelement, welches als Gewebe ausgebildet ist, welches Stränge aus nichtmetallischem Werkstoff enthält. Ein derartiges Wandelement kann dabei die gesamte Lage umfassen, oder aber auch nur einen Teil derselben bilden. Das Wandelement kann die Form einer ebenen Platte aufweisen. Alternativ dazu kann das Wandelement ein wellenartiges Profil, insbesondere ein zick-zack Profil oder ein wellenartiges Profil mit gerundeten Spitzen und Talgründen umfassen.

Die erste Lage 10 und die zweite Lage 100 in der Fig. 1 sind in einer Ansicht dargestellt, welche die Oberseite 8 der Packung 7 zeigt. Die Oberseite 8 der Packung 7 ist im wesentlichen normal zur Hauptströmungsrichtung 6 angeordnet. Mit Hauptströmungsrichtung 6 wird die Strömungsrichtung bezeichnet, in welcher ein leichter flüchtiges Fluid, insbesondere ein Gas in der Kolonne ohne Einbauten nach oben, also in Richtung des Kopfes der Kolonne 5, strömt. Die der Hauptströmungsrichtung entgegengesetzte Richtung ist die Richtung, in der ein schwerer flüchtiges Fluid, das heisst zumeist eine Flüssigkeit, die Kolonne ohne Einbauten, also im freien Fall, durchströmt. In der Packung kann die Strömungsrichtung lokal von der Hauptströmungsrichtung abweichen, da die Strömung durch die Lagen der Packung umgelenkt werden kann.

Die erste Lage 10 der strukturierten Packung 7 weist ein wellenartiges Profil auf, wobei durch das wellenartige Profil eine Mehrzahl offener Kanäle 12, 14, 16 ausgebildet ist. Die Kanäle umfassen ein erstes Wellental 22, einen ersten Wellenberg 32 und einen zweiten Wellenberg 42. Der erste Wellenberg 32 und der zweite Wellenberg 42 begrenzen das erste Wellental 22. Der erste Wellenberg 32 und der zweite Wellenberg 42 weisen einen ersten Scheitel 33 und einen zweiten Scheitel 43 auf. Das erste Wellental 22 weist einen Talgrund 23 auf. Das erste Wellental 22 weist einen Talgrund 23 auf, wobei der Normalabstand vom ersten Scheitel 33 zum Talgrund 23 des Wellentals 22 gleich dem Normalabstand des zweiten Scheitels 43 zum Talgrund 23 des Wellentals 22 ist.

Der Normalabstand zwischen dem ersten Scheitel 33 des ersten Wellenbergs 32 und dem Talgrund 23 des ersten Wellentals 22 wird auch als Wellenhöhe bezeichnet. Die Wellenhöhe ist gleich dem Normalabstand. In einer Lage gemäss des gezeigten Ausführungsbeispiels der Erfindung ist die Wellenhöhe im wesentlichen konstant, das heisst, sie liegt im Bereich der üblichen Toleranzen, die im Bereich von 0.5 mm liegen.

Die zweite Lage 100 der strukturierten Packung 7 weist ein wellenartiges Profil auf, wobei das wellenartige Profil wie das Profil der Lage 10 ausgebildet ist, aber zur Hauptströmungsrichtung in einem anderen Winkel geneigt ist.

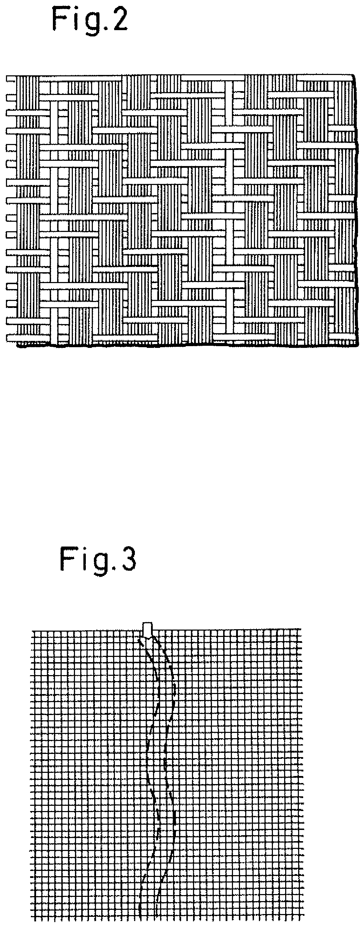

In Fig. 2 ist ein Ausschnitt aus einem Wandelement einer Lage einer strukturierten Packung gemäss der Erfindung dargestellt. Einzelne, lamellenförmig plissierte Lagen bilden eine Kreuzkanalstruktur aus, wenn sie nebeneinander gelegt werden, wie in Fig. 1 gezeigt. Die Lage 10 besteht aus Metalldrähten in der einen Webrichtung und aus Fasersträngen aus einem nichtmetallischen Werkstoff, beispielsweise aus Fasersträngen aus Glas-oder Basalt, in der anderen Webrichtung. Die Metalldrähte sind vorteilhafterweise Kettfäden, die Faserstränge bilden vorteilhafterweise die Schussfäden. Dabei sorgen die Metalldrähte für eine ausreichende mechanische Verformbarkeit und Stabilität der plissierten Lage und die Faserstränge für die hohe Kapillarität, die zur gewünschten Benetzbarkeit führt.

Die Schussfäden weisen eine Garnstärke von mindestens 100 g/1000 m auf, was 100 tex entspricht. Die Schussfäden für diese Garnstärke umfassen zumindest 20 Fäden/25.4 mm (= 1 inch).

Die Faserstränge aus dem nichtmetallischen Werkstoff können insbesondere Faserstränge aus Glas, Basalt, oder aus Polymeren enthalten. Zusätzlich zu den Fasersträngen aus nichtmetallischem Werkstoff sind Metalldrähte eingewoben, um die Beständigkeit der Lage gegen chemische Einflüsse, wie beispielsweise Korrosion oder thermische Einflüsse, wie beispielsweise Temperatur, oder mechanische Einflüsse, wie beispielsweise Druck, beständiger zu machen. Die Metalldrähte können rostfreien Stahl, Titan, Hastelloy, Duplex, Tantal enthalten oder eine Beschichtung aufweisen.

Zur Verbesserung der Benetzung können mindestens zwei Faserstränge aus dem nichtmetallischen Werkstoff unmittelbar nebeneinander angeordnet sein. Vorteilhafteniveise können auch drei, besonders bevorzugt fünf Faserstränge unmittelbar nebeneinander angeordnet sein, wie in Fig. 2 gezeigt. Zwischen einer Mehrzahl von Fasersträngen aus nichtmetallischem Werkstoff können wiederum Metalldrähte angeordnet sein. Wenn drei Faserstränge unmittelbar nebeneinander angeordnet sind, ist die Hybridgewebepackung insbesondere als Drei-Schaft-Gewebe ausgebildet, wenn fünf Faserstränge unmittelbar nebeneinander angeordnet sind, ist das Hybridgewebe insbesondere als Fünf-Schaft Gewebe ausgebildet.

Die Schussfäden sind durch Kettfäden verwoben, wobei zumindest ein Teil der Kettfäden als Metalldrähte ausgebildet sind. Bevorzugt erfolgt die Orientierung der Schussfäden in Hauptströmungsrichtung.

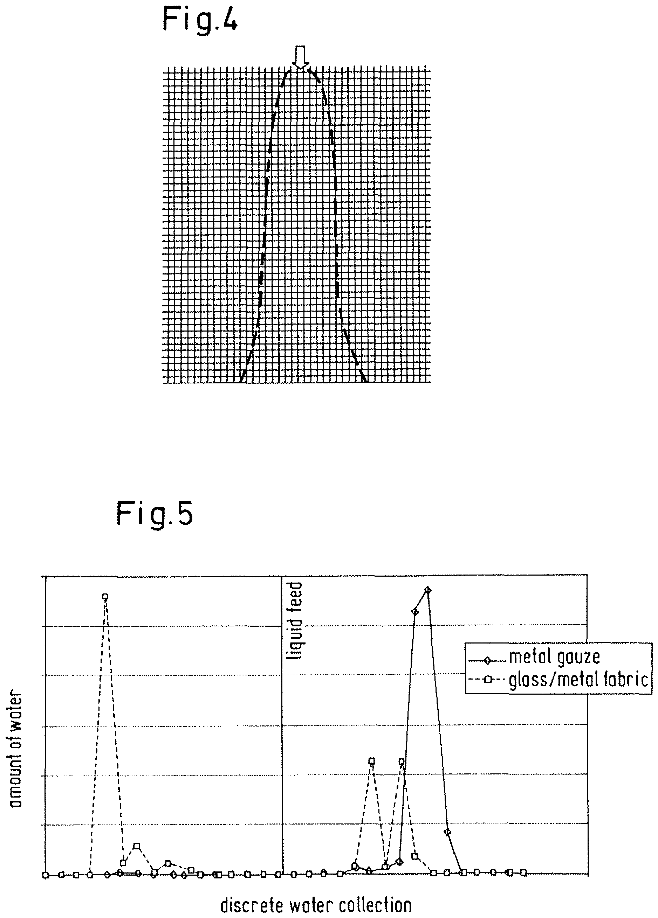

Wie gut die Gewebelage benetzt, wird in einem Benetzungsversuch mit einem Wasserrinnsal deutlich, was in Fig. 3 und Fig. 4 dargestellt ist: eine unplissierte Lage mit reinem Metallgewebe und eine unplissierte Lage aus erfindungsgemässem Gewebe werden lotrecht aufgespannt und am oberen Rand punktuell mit einem Wasserrinnsal beaufschlagt. Unplissiert bedeutet hierbei, dass die Lage eine ebene Oberfläche aufweist. Es zeigt sich bei dieser Lage aus reinem Metallgewebe, siehe Fig. 3, dass sich das Wasserrinnsal mehrheitlich auf der Gewebeoberfläche bewegt und nicht vom Gewebe aufgesogen wird. Die Ausbreitung des Rinnsals ist gering und die Rinnsalbreite entspricht über die ganze Lauflänge in etwa der Breite am Aufgabepunkt.

Bei der Gewebelage mit Fasersträngen hingegen findet eine Ausbreitung des Rinnsals auf dem Gewebe statt, wie in Fig. 4 gezeigt ist. Vom Aufgabepunkt wird das Wasser in das Gewebe hinein gesogen und breitet sich im und auf dem Gewebe aus. Die Strömung findet nicht nur an der Gewebeoberfläche sondern mehrheitlich auch im Gewebeinneren statt. Für die Anwendung bedeutet dieser Umstand eine höhere Phasengrenzfläche und eine vergrösserte Verweilzeit der Flüssigkeit in der Packung.

Wenn der Volumenstrom der Flüssigkeit zunimmt, strömt die überschüssige Flüssigkeit an der entsprechenden äusseren Oberfläche des Gewebes entlang. Hierdurch wird die Verweilzeit der Flüssigkeit auf dem Gewebe von bis zu mehreren Minuten auf wenige Sekunden reduziert. Dementsprechend kann insbesondere für Systeme, in welchen die Geschwindigkeit des Stoffaustauschs massgeblich von der Aufnahmegeschwindigkeit in der Flüssigkeit abhängt, ein Stoffaustausch nicht oder nur unvollständig erfolgen, sodass entweder eine grössere Packungshöhe erforderlich ist oder eine Mehrzahl von Packungen angeordnet sein muss. Ein derartiges System wird auch als flüssigkeitslimitiert bezeichnet, da es die Aufnahmegeschwindigkeit der übergehenden Komponente in die Flüssigkeit ist, welche die Stoffaustauschmenge pro Zeiteinheit bestimmt.

Fig. 5 zeigt die Verteilung einer Flüssigkeitsströmung auf der Unterseite mehrerer plissierter Lagen einer strukturierten Packung für ein Metallgewebe und ein Mischgewebe mit Schussfäden, die Faserstränge aus Glasfasern enthalten. Unter plissierter Lage wird hierbei eine Lage mit wellenartigem Profil verstanden, wie es in Zusammenhang mit Fig. 1 beschrieben worden ist. Die strömende Flüssigkeit hat vorzugsweise eine grosse Oberflächenspannung, insbesondere kann es sich bei der Flüssigkeit um Wasser handeln. Auf der Abszisse ist die Verteilung der Flüssigkeit über der Kantenlänge der Lage gezeigt. Die Kantenlänge ist die Breite der Lage, also die Ausdehnung der Lage in einer Ebene, die normal zur Hauptströmungsrichtung verläuft, das heisst in Richtung der Längsachse des Stoffaustauschapparats verläuft.

Auf der Ordinate ist die Wassermenge aufgetragen, die in einem bestimmten Bereich der Kantenlänge gesammelt und gemessen worden ist. Der Aufgabepunkt der Flüssigkeit befindet sich ungefähr in der Mitte der Abszisse.

Eine vertikale Linie zeigt den Ort des Flüssigkeitseintrags auf die Packungslagen, also analog dem Aufgabepunkt der Fig. 3 oder 4.

Für das Metallgewebe ist die Verteilung der Flüssigkeit als durchgezogene Linie dargestellt, für das Hybridgewebe ist die Verteilung der Flüssigkeit als punktierte Linie dargestellt. Wie Fig. 3 oder Fig. 5 zeigt, wird die Flüssigkeitsströmung durch die geneigten Kanäle der Kreuzkanalstruktur abgelenkt. Interessanterweise erfährt die Flüssigkeit auf dem Metallgewebe nur eine Ablenkung von der Hauptströmungsrichtung, und zwar in die Richtung der offenen Kanäle der plissierten Lage, auf die die Flüssigkeit aufgegeben wurde. Ein Übergang der Flüssigkeitsströmung auf benachbarte Lagen erfolgt offenbar nicht. Die Verteilung der Flüssigkeit liegt in einem schmalen Bereich, was dem in Fig. 3 gezeigten Strömungsverhalten entspricht.

Die Flüssigkeit auf dem Hybridgewebe verteilt sich nicht nach einer Vorzugsrichtung, vielmehr erfolgt die Verteilung relativ gleichmässig auf die linke und rechte Hälfte der Kante und den Neigungen der benachbarten Kanäle zu etwa gleichen Teilen folgend. Hieraus kann der Schluss gezogen werden, dass die Flüssigkeit durch die Faserstränge eine verbesserte Ausbreitung erfährt. Die Faserstränge werden von der Flüssigkeit benetzt, es bildet sich ein Flüssigkeitsstrom innerhalb der Faserstränge sowie auf den Lagenoberflächen der Packung aus. Benachbarte Lagen saugen an den berührenden Punkten die Flüssigkeit leichter auf. Die Flüssigkeit kann somit leichter von einer Lage zu einer benachbarten Lage gelangen und verteilt sich dadurch besser über die Lage.

Dieser Saugeffekt ist in der Metallgewebepackung nicht vorhanden. Daher findet in diesem Gewebe eine schlechtere Verteilung der Flüssigkeitsströmung statt, was durch die einseitige Verteilung der Flüssigkeit in Fig. 5 für das Metallgewebe belegt ist.

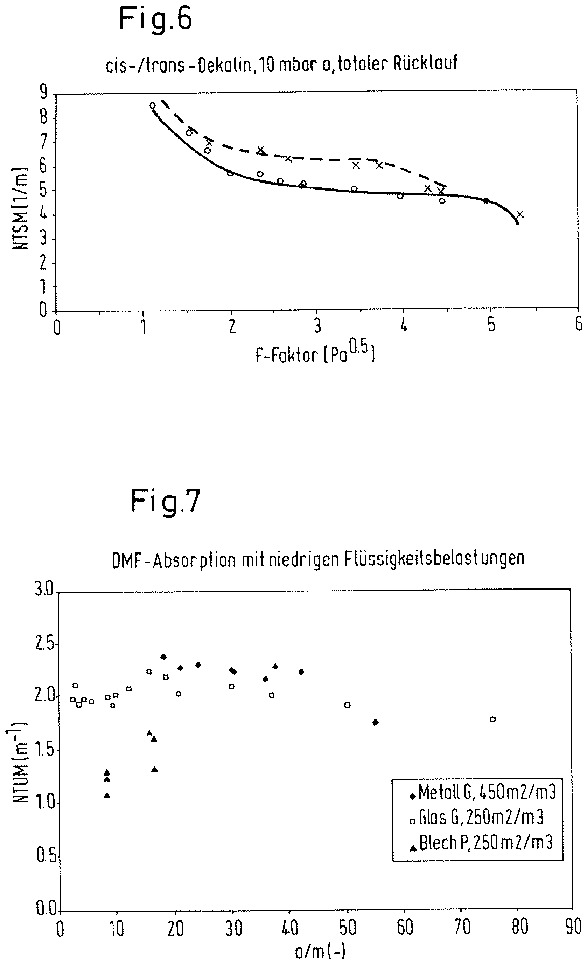

Ein weiterer Test wurde in einer Destillationskolonne mit 250 mm Innendurchmesser und mehreren Metern Packungshöhe durchgeführt: das sehr gut bekannte Testsystem cis/trans-Dekalin (U. Onken, W. Arlt: "Recommended test mixtures for distillation columns", The Institution of Chemical Engineers, 1990) wird destillativ bei 10 mbar Kopfdruck und totalem Rücklauf getrennt. Das Besondere bei diesem kleinen Kopfdruck resp. diesem hohen Vakuum ist das Auftreten sehr kleiner Flüssigkeitsbelastungen im Bereich von maximal 3 m³/m²h, vorzugsweise maximal 0.5 m³/m²h. Speziell für diesen Bereich wurde eine deutlich verbesserte Trennleistung mit der Gewebepackung mit Fasersträngen gegenüber einer reinen Metallgewebepackung gleicher Geometrie gefunden, wie in Fig. 6 dargestellt ist. Fig. 6 zeigt die Anzahl der Trennstufen pro Meter NTSM in Abhängigkeit von der Geschwindigkeit des leichter flüchtigen Fluids innerhalb der Kolonne, die durch den F-Faktor ausgedrückt ist. Der F-Faktor ist gegeben durch die Wurzel aus der Dichte des zweiten Fluids multipliziert mit der Geschwindigkeit, mittels welcher das zweite Fluid durch den Stoffaustauschapparat strömt. Das zweite Fluid ist hierbei das leichtflüchtigere Fluid, dessen Strömungsrichtung vom Bodenbereich zum Kopfbereich des Stoffaustauschapparats verläuft. Die durchgezogene Linie zeigt die Anzahl an Trennstufen pro Meter (NTSM) für eine strukturierte Packung, welche als reines Metallgewebe ausgeführt ist, die gestrichelte Linie die NTSM für eine strukturierte Packung gleicher geometrischer Abmessung und Form, welche als Gewebe mit Fasersträngen ausgeführt ist.

Sowohl für die Metallgewebepackung als auch für die Gewebepackung mit Fasersträngen aus einem nichtmetallischen Werkstoff gilt, dass bei kleinerem F-Faktor die Anzahl der theoretischen Trennstufen pro Meter zunimmt.

Die Gewebepackung mit Fasersträngen aus einem nichtmetallischen Werkstoff ist gekennzeichnet durch eine höhere Anzahl an theoretischen Trennstufen pro Meter. Somit ist nachgewiesen, dass durch diese strukturierte Packung eine höhere Trenneffizienz erreicht wird.

Ein weiteres Anwendungsbeispiel ist die Waschsektion eines Absorptionsapparats für CO₂. Derartige Absorptionsapparate sind üblicherweise als Absorptionskolonnen ausgeführt. In einer Absorptionskolonne zur Abtrennung von CO₂ aus Abgasströmen werden häufig Amine eingesetzt. Diese besitzen zwar einen niedrigen Dampfdruck, finden sich aber dennoch in geringen Konzentrationen im von CO₂ befreiten Abgas, entsprechend des Dampfdruckes des verwendeten Amins. Um diesen ungewollten Amin-Ausstoss zu reduzieren, werden am Ende solcher Absorptionskolonnen sogenannte Waschsektionen installiert, in denen mit Wasser das Amin aus dem Abgasstrom wieder herausgewaschen wird.

Solche Waschsektionen arbeiten üblicherweise in einer strukturierten Packung bei hoher Wasserbelastung, um eine ausreichende Benetzung der strukturierten Packung zu bewirken. Um die hohe Wasserbelastung zu gewährleisten, wird Wasser im Kreislauf geführt. Dieser Kreislauf wird auch als Rezirkulation (pump around) bezeichnet. Die Frischwasserzufuhr muss gering bleiben, damit die Wasserbilanz eingehalten werden kann und keine grossen Abwasserströme entstehen. Dabei wird die Flüssigkeit am unteren Ende der strukturierten Packung gesammelt, als Seitenstrom abgezogen und grösstenteils wieder am oberen Ende der strukturierten Packung mittels Flüssigkeitsverteiler auf die strukturierte Packung gleichmässig verteilt. Durch die Rückführung der wässrigen, mit Amin beladenen Flüssigkeit, kann der Gasstrom nicht auf beliebig geringe Aminkonzentrationen gereinigt werden. Würde man die beschriebene Waschsektion ausschliesslich mit Frischwasser betreiben, sind die resultierenden Flüssigkeitsbelastungen so gering, dass sich eine sehr grosse Packungshöhe ergäbe. Der Druckverlust würde durch die erforderliche grosse Packungshöhe ebenfalls zunehmen, was bei der beschriebenen Anwendung zu höheren Betriebskosten führt.

Mit einer erfindungsgemässen strukturierten Packung können diese Waschsektionen nun bei sehr kleinen Flüssigkeitsbelastungen effizient betrieben werden: es wird gerade so viel Wasser durch die strukturierte Packung geleitet, um eine ausreichende Benetzung zu gewährleisten. Die Flüssigkeitsbelastung liegt zwischen 0.03 m³/m²h und 0.5 m³/m²h. Da Amine einen sehr geringen Dampfdruck aufweisen und gut wasserlöslich sind, kann mit der geringen, aber aminfreien Wassermenge eine wesentlich niedrigere Aminkonzentration im austretenden Gasstrom erreicht werden, als mit der oben beschriebenen Rezirkulation. Zusätzlich wird der Druckabfall der Waschsektion wegen der Verwendung der erfindungsgemässen strukturierten Packung auf ein Minimum reduziert. Ferner entstehen weitere Einsparungen bezüglich Investitions- und Betriebskosten, da keine Zirkulationspumpe benötigt wird und die Flüssigkeit am unteren Ende der strukturierten Packung nicht gesammelt und abgezogen werden muss.

Gemäss eines weiteren bevorzugten Ausführungsbeispiels wird die Absorption von Dimethylformamid (DMF) aus Luft in Wasser durchgeführt. Da DMF in Wasser sehr gut löslich ist, werden für die Absorption nur sehr kleine Mengen an Wasser benötigt. Zur Durchführung der Absorption wird Wasser mit dem DMF enthaltenden Gas in Kontakt gebracht. Je grösser die Kontaktoberfläche zwischen Wasser und Gas ist, desto schneller kann das DMF von dem Gas in das Wasser übergehen. Diese Kontaktoberfläche entspricht der Stoffaustauschfläche. Der Stoff, hier DMF, wird auf der gesamten Stoffaustauschfläche vom Gas in das Wasser transportiert. Die Stoffaustauschfläche wird üblicherweise durch die strukturierte Packung bereitgestellt. Das Wasser verteilt sich entlang der strukturierten Packung, indem es einen dünnen Film ausbildet, welcher die Oberfläche der strukturierten Packung überzieht.

Das Ergebnis dieser Messung ist in Fig. 7 dargestellt, welche die Anzahl der Transfereinheiten pro Meter (NTUM) als Funktion des Absorptionsfaktors (A/m) für verschiedene Packungstypen angibt. Der Absorptionsfaktor gibt das Verhältnis zwischen Steigung der Betriebslinie A und der Gleichgewichtslinie m im Gleichgewichtsdiagramm (x-y-Diagramm) an. Hierbei berechnet sich die Steigung der Betriebslinie A aus dem Verhältnis des Molenstroms des schwerer flüchtigen Fluids zum Molenstrom des leichter flüchtigen Fluids.

Als Packungstypen sind eine strukturierte Packung gemäss der Erfindung, nachfolgend als Hybridgewebepackung GlasG bezeichnet, eine Metallgewebepackung, nachfolgend als MetallG bezeichnet, und eine Blechpackung, nachfolgend als BlechP bezeichnet, verwendet worden.

Die nachfolgende Tabelle gibt die spezifischen Oberflächen a der verwendeten Packungstypen an:

| Typ | a [m²/m³] | Aufbau |
|---|---|---|
| GlasG □ | 250 | Gewebe mit Schussfäden aus Glasfaser |
| MetallG ◊ | 450 | Metallgewebe |
| BlechP Δ | 250 | Blech |

Die Grafik zeigt, dass die Hybridgewebepackung eine ähnliche Absorptionseffizienz aufweist wie eine Metallgewebepackung. Diese Effizienz der Hybridgewebepackung wird allerdings mit ungefähr der halben spezifischen Oberfläche erhalten.

Zum Vergleich liefert die Blechpackung mit derselben spezifischen Oberfläche wie die Hybridgewebepackung eine geringere Anzahl an Trennstufen pro Meter oder NTUM (number of transfer units per metre), was durch die schlechte Benetzung der Blechpackung erklärt werden kann.

Aus dem Verhältnis der spezifischen Oberflächen von 2:1 für MetallG :BlechP wäre zu erwarten, dass die Anzahl der theoretischen Trennstufen pro Meter für die Metallgewebepackung NTUM(MetallG) ungefähr doppelt so gross wie die Anzahl der theoretischen Trennstufen pro Meter NTUM(BlechP) sein müsste. Tatsächlich beträgt die Anzahl der theoretischen Trennstufen pro Meter für die Metallgewebepackung NTUM(MetallG) allerdings nur 1.6-mal der Anzahl der theoretischen Trennstufen pro Meter NTUM für die Blechpackung (BlechP). Dies lässt sich mit einer schlechteren Ausnutzung der spezifischen Oberfläche aufgrund der kleineren Kantenbelastung für das Metallgewebe MetallG begründen.

Die Kantenbelastung ist bei einer Blechpackung BlechP grösser als bei einer Metallgewebepackung vom Typ MetallG, da die Flüssigkeitsbelastung L in beiden Fällen gleich bleibt, die Oberfläche von BlechP ist aber viel kleiner als von MetallG, was auch im einleitend genannten Stand der Technik dokumentiert ist.

Nach der Theorie müsste NTUM(GlasG) gleich NTUM(BlechP) sein, da die spezifischen Oberflächen gleich sind. Die gemäss Fig. 7 erzielten Ergebnisse zeigen aber für NTUM einen Faktor von 1.5 zwischen diesen beiden Packungen. Da dieser Faktor offensichtlich nicht der Differenz der spezifischen Oberflächen zuzuschreiben sein kann, muss die Verbesserung durch die Verwendung eines Gewebes bedingt sein, welches Faserstränge aus einem nichtmetallischen Werkstoff enthält und somit eine verbesserte Benetzung aufweist.

Für die Hybridgewebepackung vom Typ GlasG wurden für die als Schussfäden eingesetzten Stränge Garne mit der in nachfolgender Aufzählung angegebenen Garnstärke verwendet: Glasfaser (GF, 136 tex) mit einer Garnstärke von 136g/1000m oder Basaltfaser (BF, 577 tex) 577g/1000m. Die Anordnung der Stränge zur Ausbildung des Gewebes ist in der nachfolgenden Aufstellung beschrieben:
Gemäss der ersten Variante besteht das Gewebe aus einer Glasfaser (GF) mit einer Garnstärke wie oben angegeben und periodisch zwischen der Glasfaser angeordneten Metalldrähten aus Edelstahl, wobei die Drahtstärke der Metalldrähte 0.16 mm beträgt. Die Dichte des Gewebes beträgt in dieser Anordnung 0.616 kg/m². In diesem Fall sind 70.6 Fäden/25.4 mm (= 1 inch) in Kettrichtung und 40.9 Fäden/25.4 mm (= 1 inch) in Schussrichtung angeordnet.

Gemäss der zweiten Variante besteht das Gewebe aus einer Basaltfaser (BF) mit einer Garnstärke wie oben angegeben und periodisch zwischen der Glasfaser angeordneten Metalldrähten aus Edelstahl, wobei die Drahtstärke der Metalldrähte 0.16 mm beträgt. Die Dichte des Gewebes beträgt in dieser Anordnung 0.923 kg/m². In diesem Fall sind 70.6 Fäden/25.4 mm (= 1 inch) in Kettrichtung und 25.7 Fäden/25.4 mm (= 1 inch) in Schussrichtung angeordnet.

Überraschenderweise kann für Gewebe, die zumindest eine der beiden genannten Faserstränge enthalten, eine fast ebenso hohe Anzahl an theoretischen Trennstufen pro Meter nachgewiesen werden wie für die Metallgewebepackung (MetallG) mit fast der doppelten spezifischen Oberfläche.

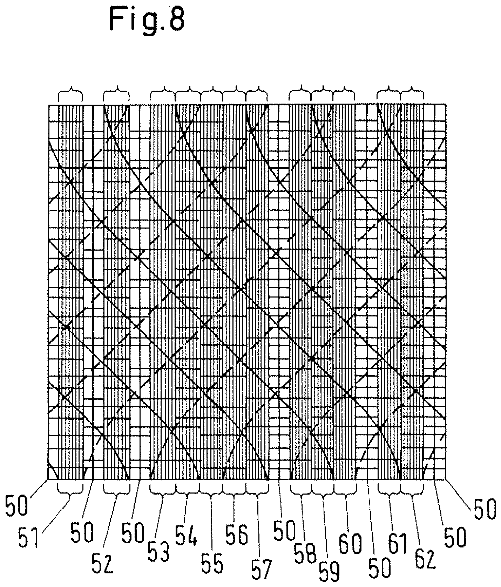

Ein besonders vorteilhaftes Ausführungsbeispiel einer Hybridgewebepackung ist in Fig. 8 gezeigt. Eine Lage der in Fig. 8 gezeigten Hybridgewebepackung weist eine untere Randzone, eine mittlere Zone und eine obere Randzone auf. Die Randzonen befinden sich an der Oberseite und der Unterseite der Lage, wenn die Lage als Teil einer strukturierten Packung in einem Stoffaustauschapparat eingebaut ist. Die Randzonen sind derart ausgestaltet, dass der Winkel zur Hauptströmungsrichtung kleiner ist als in der mittleren Zone. Insbesondere kann der Winkel von einem Minimalwert kontinuierlich zunehmen, bis der Neigungswinkel der Kanäle der mittleren Zone gegenüber der Hauptströmungsrichtung erreicht ist. Durch die besondere Ausgestaltung der oberen und unteren Randzone ist der Strömungswiderstand der entsprechenden Randzone gegenüber jenem der mittleren Zone reduziert.

Der Minimalwert des Winkels kann insbesondere 0° betragen, sodass die Tangente an die Krümmung des Kanals an der Kante parallel zur Hauptströmungsrichtung ist.

In Fig. 8 sind auch verschiedene Kombinationen von Fasersträngen aus nichtmetallischem Werkstoff und Metalldrähten gezeigt. Beispielsweise können die Faserstränge 51, 52 abwechselnd zu den Metalldrähten 50 angeordnet sein. Alternativ dazu können, wie bereits in Fig. 2 gezeigt ist, die Faserstränge 53, 54, 55, 56, 57 unmittelbar aneinander angrenzend angeordnet sein. Es kann auch eine kleinere Anzahl als fünf Faserstränge aneinander angrenzend angeordnet sein, beispielsweise drei Faserstränge, in Fig. 8 mit 58, 59, 60 bezeichnet, oder zwei Faserstränge, in Fig. 8 mit 61, 62 bezeichnet.

Zusammenfassend hat sich somit gezeigt, dass die Hybridgewebepackung sehr geeignet für Flüssigkeiten ist, die sich auf üblichen strukturierten Packungen schlecht ausbreiten. Des Weiteren ist die Hybridgewebepackung geeignet für Anwendungen mit sehr kleinen Flüssigkeitsbelastungen.

## Patentansprüche

1. Stoffaustauschverfahren umfassend die Schritte: Zuführen eines ersten Fluids und eines zweiten Fluids in einen Stoffaustauschapparat, wobei der Stoffaustauschapparat einen Behälter umfasst, welcher einen Kopfbereich, einen Bodenbereich und einen Stoffaustauschbereich aufweist, wobei das erste Fluid mit dem zweiten Fluid zumindest im Stoffaustauschbereich in Kontakt gebracht wird, wobei der Stoffaustauschbereich zwischen dem Kopfbereich und dem Bodenbereich angeordnet ist und der Stoffaustauschbereich eine strukturierte Packung enthält, welche eine Mehrzahl von zueinander benachbarten Lagen aus einem Gewebe enthält, welches Faserstränge aus einem nichtmetallischen Werkstoff enthält, die als Schussfäden ausgebildet sind, wobei zwischen den Fasersträngen aus nichtmetallischem Werkstoff Metalldrähte angeordnet sind, **dadurch gekennzeichnet, dass** die Schussfäden eine Garnstärke von mindestens 100 g/1000 m aufweisen, die Schussfäden zumindest 20 Fäden/25.4 mm umfassen und der Stoffaustauschapparat mit einer Flüssigkeitsbelastung von maximal 3 m³/m²h betrieben wird.

2. Verfahren nach Anspruch 1, wobei der Stoffaustauschapparat mit einer Flüssigkeitsbelastung von maximal 0.5 m³/m²h betrieben wird.

3. Verfahren nach Anspruch 1 oder 2, wobei eines der ersten oder zweiten Fluide eine Oberflächenspannung von zumindest 30 mN/m, vorzugsweise zumindest 50 mN/m aufweist.

4. Verfahren nach einem der vorhergehenden Ansprüche, wobei das Fluid Wasser, Amine, Amide, insbesondere Dimethylformamid, ein-oder mehrwertige Alkohole, insbesondere Alkohole von Fettsäuren, Mono-, Di-, Tri-, Tetraethylenglykol, Monomere von Kunststoffen, insbesondere MDI (Diphenylmethandiisocyanat), DMT (Dimethylterephthalat), Carbonsäuren, insbesondere Fettsäuren, Ester, insbesondere Fettsäureester, oder Mischungen von zumindest zwei der Komponenten enthält.

5. Strukturierte Packung für einen Stoffaustauschapparat mit einem Kopfbereich und einem Bodenbereich, wobei die strukturierte Packung eine Mehrzahl von zueinander benachbarten Lagen enthält, welche je eine Oberseite ausbilden, die dem Kopfbereich zugewendet ist und eine Unterseite ausbilden, welche dem Bodenbereich zugewendet ist, wobei die Lage ein Wandelement aufweist, das sich zwischen der Oberseite und der Unterseite erstreckt, das Wandelement als ein Gewebe ausgebildet ist, welches Faserstränge aus einem nichtmetallischen Werkstoff enthält, die als Schussfäden ausgebildet sind, wobei zwischen den Fasersträngen aus nichtmetallischem Werkstoff Metalldrähte angeordnet sind, **dadurch gekennzeichnet, dass** die Schussfäden eine Garnstärke von mindestens 100 g/1000 m aufweisen und die Schussfäden zumindest 20 Fäden/25.4 mm umfassen.

6. Strukturierte Packung nach Anspruch 5, wobei mindestens zwei Faserstränge aus dem nichtmetallischen Werkstoff unmittelbar nebeneinander angeordnet sind.

7. Strukturierte Packung nach Anspruch 5 oder 6, wobei die spezifische Oberfläche der Packung von 0 m²/m³ bis maximal 500 m²/m³ beträgt.

8. Strukturierte Packung nach einem der Ansprüche 5 bis 7, wobei die Schussfäden durch Kettfäden verwoben sind, wobei zumindest ein Teil der Kettfäden als Metalldrähte ausgebildet sind.

9. Strukturierte Packung nach einem der Ansprüche 5 bis 8, wobei die Faserstränge aus nichtmetallischem Werkstoff Glas, Basalt oder ein Polymer enthalten.

10. Strukturierte Packung nach einem der Ansprüche 6 bis 9, wobei die Metalldrähte rostfreien Stahl, Titan, Hastelloy, Duplex, Tantal enthalten oder eine Beschichtung aufweisen.

11. Strukturierte Packung nach einem der Ansprüche 5 bis 10, wobei die Wand der Lage ein wellenartiges Profil aufweist, durch welches eine Mehrzahl offener Kanäle ausgebildet ist, welche sich von der Oberseite der Packung zur Unterseite der Packung erstrecken, wobei die Kanäle ein erstes Wellental, einen ersten Wellenberg und einen zweiten Wellenberg umfassen, wobei der erste Wellenberg und der zweite Wellenberg das erste Wellental begrenzen, wobei der erste und der zweite Wellenberg einen ersten Scheitel und einen zweiten Scheitel aufweisen.

12. Stoffaustauschapparat enthaltend eine strukturierte Packung nach einem der vorhergehenden Ansprüche 5 bis 11.

13. Stoffaustauschapparat nach Anspruch 12, welcher als Absorptionsapparat oder als Destillationskolonne ausgebildet ist.

## Claims

1. A method of mass transfer comprising the steps: supplying a first fluid and a second fluid into a mass transfer apparatus, wherein the mass transfer apparatus comprises a container which has a head region, a base region and a mass transfer region; wherein the first fluid is brought into contact with the second fluid at least in the mass transfer region; wherein the mass transfer region is arranged between the head region and the base region and the mass transfer region includes a structured packing which includes a plurality of mutually adjacent layers of a fabric which includes fiber strands of a non-metallic material which are formed as weft threads; and wherein metal wires are arranged between the fiber strands of non-metallic material, **characterized in that** the weft threads have a yarn count of at least 100 g/1000 m; **in that** the weft threads comprise at least 20 yarns/25.4 mm; and **in that** the mass transfer apparatus is operated at a fluid load of at most 3 m³/m²/h.

2. A method in accordance with claim 1, wherein the mass transfer apparatus is operated at a fluid load of at most 0.5 m³/m²/h.

3. A method in accordance with claim 1 or claim 2, wherein one of the first fluid or the second fluid has a surface tension of at least 30 mN/m, preferably of at least 50 mN/m.

4. A method in accordance with any one of the preceding claims, wherein the fluid includes water; amines; amides, in particular dimethylformamide; monohydric or polyhydric alcohols, in particular alcohols of fatty acids; monoethylene glycol; diethylene glycol, triethylene glycol; tetraethylene glycol; monomers of plastics, in particular MDI (diphenylmethane diisocyanate); DMT (dimethyl terephthalate); carboxylic acids, in particular fatty acids; esters, in particular fatty acid esters; or mixtures of at least two of the components.

5. A structured packing for a mass transfer apparatus having a head region and a base region, wherein the structured packing includes a plurality of mutually adjacent layers which each form an upper side which faces the head region and each form a bottom side which faces the base region, wherein the layer has a wall element which extends between the upper side and the bottom side, the wall element being formed as a fabric which includes fiber strands of a non-metallic material which are formed as weft threads, wherein metal wires are arranged between the fiber strands of non-metallic material, **characterized in that** the weft threads have a yarn count of at least 100 g/1000 m and the weft threads comprise at least 20 yarns/25.4 mm.

6. A structured packing in accordance with claim 5, wherein at least two fiber strands of non-metallic material are arranged directly adjacent to one another.

7. A structured packing in accordance with claim 5 or claim 6, wherein the specific surface area of the packing amounts to from 0 m²/m³ up to at most 500 m²/m³.

8. A structured packing in accordance with any one of the claims 5 to 7, wherein the weft threads are interwoven by warp threads, with at least some of the warp threads being configured as metal wires.

9. A structured packing in accordance with any one of the claims 5 to 8, wherein the fiber strands of non-metallic material include glass, basalt or a polymer.

10. A structured packing in accordance with any one of the claims 6 to 9, wherein the metal wires include stainless steel, titanium, hastelloy, duplex, tantalum or have a coating.

11. A structured packing in accordance with any one of the claims 5 to 10, wherein the wall of the layer has a wave-like section through which a plurality of open channels are formed which extend from the upper side of the packing to the bottom side of the packing, with the channels comprising a first wave trough, a first wave crest and a second wave crest, with the first wave crest and the second wave crest bounding the first wave trough and with the first and second wave crests having a first peak and a second peak.

12. A mass transfer apparatus including a structured packing in accordance with any one of the preceding claims 5 to 11.

13. A mass transfer apparatus in accordance with claim 12, which is configured as an absorption apparatus or as a distillation column.

## Revendications

1. Procédé d'échange de matières incluant les étapes consistant à :
admettre un premier fluide et un second fluide dans un appareil d'échange de matières, ledit appareil d'échange de matières incluant un récipient qui comprend une zone de tête, une zone de fond et une zone d'échange de matières, dans lequel le premier fluide est amené en contact avec le second fluide au moins dans la zone d'échange de matières, ladite zone d'échange matière étant agencée entre la zone de tête et la zone de fond et la zone d'échange de matières contient un garnissage structuré, qui contient une pluralité de couches juxtaposées les unes aux autres d'un textile qui contient des cordons de fibres d'un matériau non métallique et qui sont réalisés sous forme de fils de trame, dans lequel des fils métalliques sont agencés entre les cordons de fibres en matériau non métallique,
**caractérisé en ce que** les fils de trame présentent un titre d'au moins 100 g/1000 m, les fils de trame incluent au moins 20 fils pour 25,4 mm et l'appareil d'échange de matières est amené à fonctionner avec une charge en liquide maximale de 3 m³/m²h.

2. Procédé selon la revendication 1, dans lequel l'appareil d'échange de matières est amené à fonctionner avec une charge en liquide maximale de 0,5 m³/m²h.

3. Procédé selon la revendication 1 ou 2, dans lequel l'un parmi le premier ou le second fluide présente une tension superficielle d'au moins 30 mN/m, de préférence d'au moins 50 mN/m.

4. Procédé selon l'une des revendications précédentes, dans lequel le fluide contient de l'eau, des amines, des amides, en particulier du formamide de diméthyl, des alcools monovalents ou multivalents, en particulier des alcools d'acide gras, mono-, di-, tri-, tétraéthyle glycol, des monomères de matière plastique, en particulier MDI (diphényle méthane diisocyanate), DMT (diméthyle téréphtalate), des acides carbonés, en particulier des acides gras, esters, en particulier esters d'acide gras, ou des mélanges d'au moins deux des composants.

5. Garnissage structuré pour un appareil d'échange de matières comprenant une zone de tête et une zone de fond, ledit garnissage structuré contenant une pluralité de couches juxtaposées les unes aux autres, qui forment chacune une face supérieure qui est tournée vers la zone de tête et qui forment une face inférieure qui est tournée vers la zone de fond, dans lequel la couche comporte un élément de paroi qui s'étend entre la face supérieure et la face inférieure, ledit élément de paroi étant réalisé sous forme d'un textile qui contient des cordons de fibres en un matériau non métallique, qui sont réalisés sous forme de fils de trame, et des fils métalliques sont agencés entre les cordons de fibres en matériau non métallique,
**caractérisé en ce que** les fils de trame présentent un titre d'au moins 100 g/1000 m, et les fils de trame incluent au moins 20 fils/25,4 mm.

6. Garnissage structuré selon la revendication 5, dans lequel au moins deux cordons de fibres en matériau non métallique sont agencés directement l'un à côté de l'autre.

7. Garnissage structuré selon la revendication 5 ou 6, dans lequel la surface spécifique du garnissage va de 0 m²/m³ jusqu'à 500 m²/m³ au maximum.

8. Garnissage structuré selon l'une des revendications 5 à 7, dans lequel les fils de trame sont tissés avec des fils de chaîne, et au moins une partie des fils de chaîne sont réalisés sous forme de fils métalliques.

9. Garnissage structuré selon l'une des revendications 5 à 8, dans lequel les cordons de fibres en matériau non métallique contiennent du verre, du basalte ou un polymère.

10. Garnissage structuré selon l'une des revendications 6 à 9, dans lequel les fils métalliques contiennent de l'acier inoxydable, du titane, un alliage dit "Hastelloy", du duplex, du tantale, ou présentent un revêtement.

11. Garnissage structuré selon l'une des revendications 5 à 10, dans lequel la paroi de la couche présente un profil ondulé au moyen duquel une pluralité de canaux ouverts sont réalisés, lesquels s'étendent depuis la face supérieure du garnissage jusqu'à la face inférieure du garnissage, et les canaux incluent une première vallée d'ondulation, un premier sommet d'ondulation, et un second sommet d'ondulation, tels que le premier sommet d'ondulation et le second sommet d'ondulation délimitent la première vallée d'ondulation, et le premier et le second sommet d'ondulation présentent une première crête et une seconde crête.

12. Appareil d'échange de matières contenant un garnissage structuré selon l'une des revendications précédentes 5 à 11.

13. Appareil d'échange de matières selon la revendication 12, qui est réalisé sous forme d'appareil d'absorption ou sous forme de colonne de distillation.
